# EUROPEAN PATENT SPECIFICATION

(11) **EP 0 676 757 B1**
(45) Date of publication and mention of the grant of the patent: **13.10.1999**
(21) Application number: 95300944.6
(22) Date of filing: 15.02.1995
(51) Int. Cl.: G11B 20/12, G11B 27/30, G11B 27/034, G11B 7/007, G11B 27/10, G11B 27/32, H04N 9/804

(54) **Recording medium having correlation information that represents correlation between physical sectors and logical sectors, recording method for recording data thereto, and reproducing apparatus thereof**
Aufzeichnungsträger, der eine die Korrelation zwischen physischen und logischen Sektoren darstellende Korrelationsinformation enthält, Aufzeichnungsverfahren und Wiedergabevorrichtung dafür
Support d'enregistrement comportant une information de corrélation qui représente la corrélation entre les secteurs physiques et les secteurs logiques, méthode d'enregistrement des données et appareil de reproduction

(30) Priority: 08.04.1994 JP 7089894
(43) Date of publication of application: 11.10.1995
(73) Proprietor: KABUSHIKI KAISHA TOSHIBA, Kawasaki-shi, Kanagawa-ken 210-8572 (JP); TOSHIBA AVE CO., LTD, Minato-ku, Tokyo 105 (JP)
(72) Inventor: Kaneshige, Toshihiko, c/o Intellectual Pty Div., Minato-ku, Tokyo (JP); Ishizawa, Yoshiyuki, c/o Intellectual Pty Div., Minato-ku, Tokyo (JP)
(74) Representative: Waldren, Robin Michael

(56) References cited:
- EP-A- 0 448 378
- EP-A- 0 508 928
- PATENT ABSTRACTS OF JAPAN vol. 016, no. 182 (P-1346), 30 April 1992 & JP 04 021041 A (NEC CORP), 24 January 1992,

## Description

The present invention relates to a recording medium, a recording method for recording data thereto, and a reproducing apparatus thereof.

In recent years, an apparatus for digitizing moving picture information such as a video signal and for recording and reproducing the digitized information to and from a digital recording medium such as an optical disc has been used. Generally, since the information amount of the moving picture information is large, it is sometimes compressed so as to effectively use the recording medium. After digitized image information is orthogonally transformed by for example DCT (Discrete Cosine Transform) technique, the transformed data is encoded with entropy code such as Huffman code. Thereafter, the picture information is compressed. The basic conception of picture compression is employed in JPEG (Joint Photographic Expert Group) of still picture compression system and in MPEG (Moving Picture Coding Expert Group) of moving picture compressing system. Since the Huffman code is a variable length code, the compressed code amount varies picture by picture. In other words, the code amount may vary at least on frame-by-frame basis.

In a reproducing apparatus of a recording medium that records compressed picture information, a frame-by-frame detection and a special reproducing operation are desired. In this case, it is preferable to record compressed code on frame-by-frame basis as the minimum access unit of the reproducing apparatus. To do that, compressed code of each video frame is recorded in a corresponding minimum access region. In this case, the data amount of the minimum access region should accord with the expected maximum code amount of each video frame. However, in many cases, the code amount of each video frame is smaller than the expected maximum code amount. Thus, such a difference results in a wasteful region. To solve such a problem, the minimum access region is formed with lesser code amount than that of each video frame and each video frame is composed of a plurality of minimum access regions so as to minimize occurrences of wasteful regions.

Next, a related art reference for solving such a problem will be described.

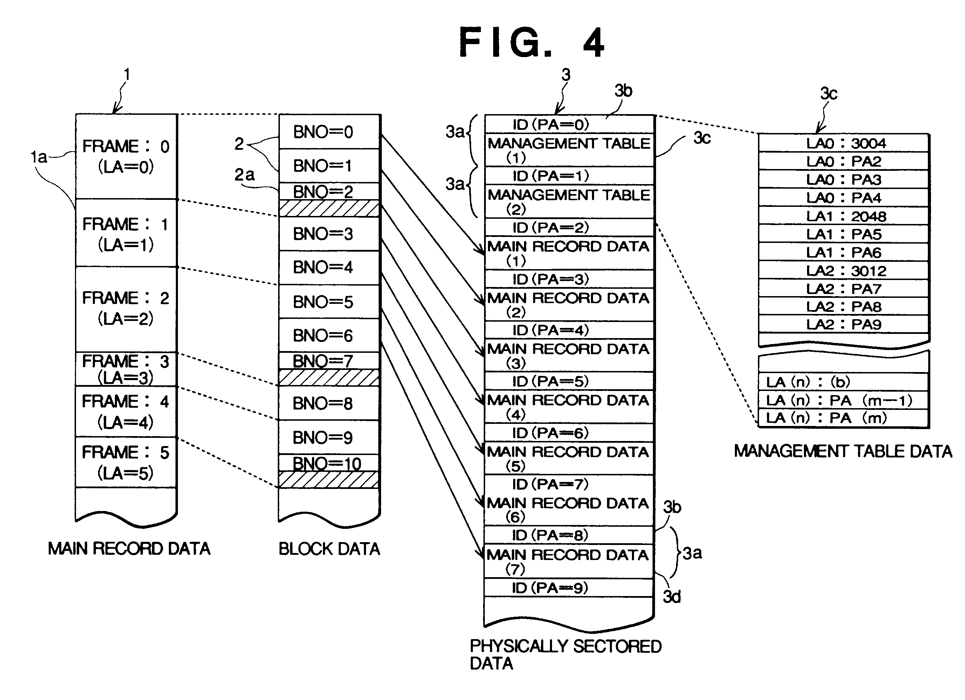

Fig. 4 is a schematic diagram showing the composition of data recorded on a recording medium such as an optical disc and a generating process of record data.

In Fig. 4, main record data 1 is a data group of a sequence of moving picture information that is compressed on frame-by-frame basis. In the drawing, "n" of "frame: n" represents a video frame number. A compressed data region of each video frame is defined as one logical sector region 1a. Each logical sector region 1a is designated a unique sector number (LA = n). The data amount of each logical sector region 1a varies. For example, the data amount of a zero-th logical sector is 3,004 bytes. The data amount of a first logical sector is 2,048 bytes. The data amount of a second logical sector is 3,012 bytes. The data amount of a third logical sector is 1,024 bytes. The data amount of a fourth logical sector is 1,524 bytes.

The main record data 1, which has different data amount for each logical sector, is divided into block data 2 with a predetermined data length (for example, 1024 bytes). Each block data 2 is temporarily designated a block number n (BNO = n). The zero-th logical sector is divided into three portions that are stored in block numbers 0, 1, and 2. The data amount of the zero-th logical sector stored in the block number 2 is 956 bytes. Thus, since it does not satisfy 1024 bytes of one block, invalid data 2a is added so that zero-th logical sector stored in the block number 2 satisfies 1,024 bytes. The invalid data 2a is hatched in the drawing. The first logical sector is divided into two portions that are stored in block numbers 3 and 4. The data amount of the first logical sector is 2,048 bytes that are twice as many as 1,024 bytes of data amount of one block. Thus, in the first logical sector, it is not necessary to add invalid data. In the same manner, each logical sector is divided and re-composed into the block data 2.

The block data 2 is converted into physically sectored data 3 that is directly recorded on the recording medium. The physically sectored data 3 is composed of a plurality of successive physical sectors 3a. One physically sectored data 3a is composed of ID data 3b and management table data 3c or main record data 3d. The ID data 3b has a predetermined bit length. The management table data 3c has a bit length that is the half that of the block data. The ID data 3b is designated a physical sector number. In the drawing, the physical sector number is denoted by "PA = n". In this example, a management table (1) is stored in the physical sector 3a with the physical sector number 0. A management table (2) is stored in the physical sector 3a with the physical sector number 1. The block data 2 with the block number 0 is stored in the physical sector 3a with the physical sector number 2. The block data 2 with the block number 1 is stored in the physical sector 3a with the physical sector number 3. In the same manner, each block data 2 is successively stored in a corresponding physical sector 3a.

On the other hand, the management table data 3c is composed of a first management table and a second management table. The management table data 3c has the correlation information between the logical sectors 1a and the physical sector 3a. In this example, the management table data 3c has information of one valid sector and a plurality of corresponding physical sector numbers for each logical sector number. In the drawing, "n" and "b" of "LA (n): (b)" represent a logical sector number and valid data length of a physical sector number n (unit: bytes). In addition, "n" and "m" of "LA (n): PA (m)" represent a logical sector number and a physical sector number at which data with a logical sector number n is stored.

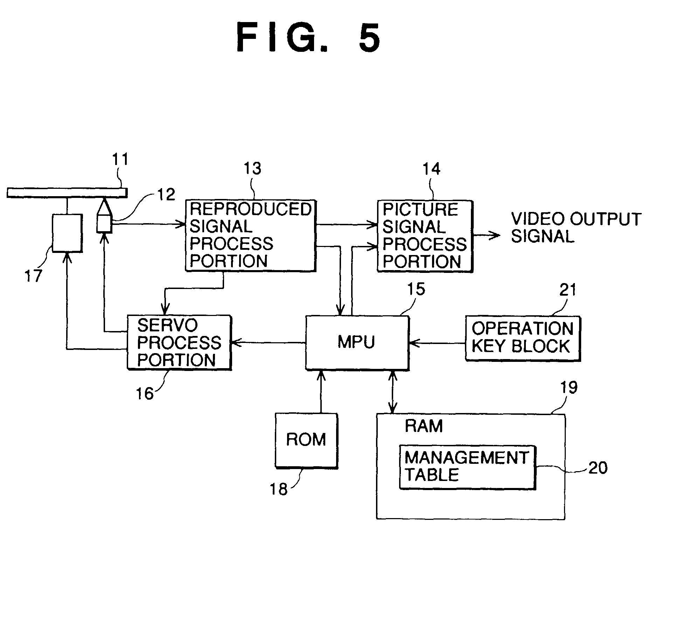

Next, a method for reproducing data from the optical disc with such a record data composition will be described. Fig. 5 is a block diagram showing the construction of a conventional optical disc reproducing apparatus.

In Fig. 5, reference numeral 11 is an optical disc. A record signal on the optical disc 11 is read by an optical pickup 12 and output to a reproduced signal process portion 13. The reproduced signal process portion 13 performs a predetermined process for the input signal and supplies the main record data to a picture signal process portion 14, information such as the ID data and management data that are used to perform reproduction control to an MPU (Micro-Processor Unit) 15, and information necessary for disc servo operation to a servo process portion 16. The picture signal process portion 14 performs a predetermined process for reproduced main record data corresponding to the data length information of the corresponding logical sector received from the MPU 15 and generates and outputs a video signal. The servo process portion 16 generates and outputs a spindle motor drive signal, a tracking control signal, and a focus control signal for the optical pickup 12 corresponding to a disc reproduction control signal received from the MPU 15 and control information received from the reproduced signal process portion 13. A spindle motor 17 rotates the optical disc 11 corresponding to a drive signal received from the servo process portion 16. The MPU 15 operates corresponding to an operation program stored in an ROM (Read Only Memory) 18 and stores working data to an RAM (Random Access Memory) 19. In addition, the RAM stores the management table 20 read from the optical disc 11. An operation key block 21 is connected to the MPU 15 so that the user inputs commands to the MPU 15.

Next, an example of the operation of the optical disc reproducing apparatus will be described. When the optical disc 11 is mounted on the apparatus, the MPU 15 commands the servo process portion 16 to reproduce the management table from the optical disc 11. The reproduced management table data is stored in the RAM 19 through the reproduced signal process portion 13 and the MPU 15. When the user inputs a command that causes the MPU 15 to reproduce data starting from the frame number 0 (namely, the logical sector number 0) through the operation key block 21, the MPU 15 accesses the RAM 19, reads the valid data length of the logical sector number 0 from the management table 20 in the RAM 19, and sends the valid data length necessary for reproducing one frame to the picture signal process portion 14. In addition, the MPU 15 reads physical sector numbers that composes the logical sector number 0 from the management table 20 in the RAM 19 and commands the servo process portion 16 to successively read the corresponding physical sectors. The servo process portion 16 reads the physical sectors commanded by the MPU 15. After the reproduced signal process portion 13 processes the reproduced signal of the physical sectors being read, it supplies only the main record data to the picture signal process portion 14. The picture signal process portion 14 re-composes picture for one frame corresponding to the input data with the valid data length for one frame and outputs the re-composed picture as a video signal. The reproduced signal process portion 13 supplies the physical sector numbers described in the ID data of the physical sectors being read to the MPU 15. Thus, the MPU 15 acknowledges that the commanded physical sectors have been reproduced. After the MPU 15 acknowledges that all the physical sector numbers that compose the logical sector number 0 have been reproduced, the MPU 15 reads physical sector numbers that compose the logical sector number 1 from the management table 20 in the RAM 19 and commands the servo process portion 16 to successively read the corresponding physical sectors. In the same manner, the moving picture information is obtained as a video signal. When the user inputs a command that causes the apparatus to reproduce data starting from a desired frame number through the operation key block 21, the apparatus performs the above-described operation.

Thus, in the conventional optical disc reproducing apparatus, the management table 20, which correlates the logical sectors and the physical sectors so as to manage them, is required. In addition, the management table 20 should be stored in the RAM 19 so that the MPU 15 can freely and promptly access the management table 20. However, since the management data amount is huge, the storage capacity of the RAM 19 is large. When the RAM 19 with the large storage capacity is used, the cost of the reproducing apparatus increases.

In recent years, the storage capacity of the recording mediums such as optical discs has been increased. To reduce the invalid data regions, the number of physical sectors on the recording mediums remarkably increases. However, as the number of physical sectors increases, the amount of management data increases. Thus, such a problem becomes more critical.

The present invention is made from the above-described point of view. A first object of the present invention is to provide a recording medium, recording method for recording data thereto, and reproducing apparatus thereof that correlate logical sectors and physical sectors without need to store correlation information in a particular region and address management data in a memory of the reproducing apparatus.

A second object of the present invention is to provide a recording medium, recording method for recording data thereto, and reproducing apparatus thereof that effectively use correlation information recorded for each physical sector.

A third object of the present invention is to provide a recording medium, recording method for recording data thereto, and reproducing apparatus thereof that determine whether or not physical sectors are data contained in a logical sector that is designated for reproduction.

A fourth object of the present invention is to provide a recording medium, recording method for recording data thereto, and reproducing apparatus thereof that designate a leading physical sector that stores data of the next logical sector corresponding to remaining information in the case that reproduction is commanded on logical-sector-by-logical-sector basis and a reproduced physical sector is not contained in the designated logical sector.

To accomplish such objects, the present invention is a data recording method as defined in claim 1, a recording medium as defined in claim 9 and a reproducing apparatus as defined in claim 17, in which data of a plurality of logical sectors with a variable bit length is divided and recorded in corresponding physical sectors with a fixed bit length, the physical sectors containing correlation information representing the correlation between the physical sectors and the logical sectors.

According to the present invention, each physical sector corresponding to a plurality of data that composes one logical sector may be disposed on the recording medium in the order of reproduction.

According to the present invention, the correlation information may contain first information and second information, the first information identifying a physical sector that contains the correlation information, the second information identifying a logical sector that contains the correlation information.

According to the present invention, the correlation information may contain third information representing the remaining data amount of a valid bit length of a logical sector that contains a physical sector that contains the correlation information.

According to the first aspect of the present invention, since each physical sector contains correlation information that represents correlation between the physical sectors and logical sectors, it is not necessary to record the correlation information in a particular region of the recording medium. In addition, it is not necessary to form the memory region that stores the correlation information on the reproducing apparatus side.

According to the second aspect of the present invention, since individual physical sectors corresponding to a plurality of data that compose one logical sector are disposed on the recording medium in the order of reproduction, the correlation information recorded for each physical sector can be more effectively used than the conventional random recording method.

According to the third aspect of the present invention, since the correlation information contains the first information, which identifies the a physical sector that contains the correlation information, and the second information, which identifies a logical sector that contains the correlation information, when the reproduction is commanded on the logical-sector-by-logical-sector basis corresponding to the identification information of the logical sector, it is determined whether or not the physical sector is data that is contained in the logical sector designated for the reproduction.

According to the fourth aspect of the present invention, since the correlation information contains third information, which represents the remaining data amount of the valid bit length of the logical sector that contains the physical sector that contains the correlation information, even if the reproduction is commanded on the logical-sector-by-logical-sector basis and the reproduced physical sector is not contained in the logical sector designated for the reproduction, a leading physical sector that records data of the next logical sector can be detected corresponding to the remaining data amount information.

These and other objects, features and advantages of the present invention will become more apparent in light of the following detailed description of a best mode embodiment thereof, as illustrated in the accompanying drawings.
Fig. 1 is a schematic diagram showing the composition and composing steps of record data of a recording medium according to a first embodiment of the present invention;
Fig. 2 is a block diagram showing the construction of an optical disc reproducing apparatus that reproduces data from the recording medium of Fig. 1;
Fig. 3 is a schematic diagram showing the composition and composing steps of record data of a recording medium according to a second embodiment of the present invention;
Fig. 4 is a schematic diagram showing the composition and composing steps of record data of a conventional recording medium; and
Fig. 5 is a block diagram showing the construction of a conventional optical disc reproducing apparatus.

Next, with reference to the accompanying drawings, embodiments of the present invention will be described.

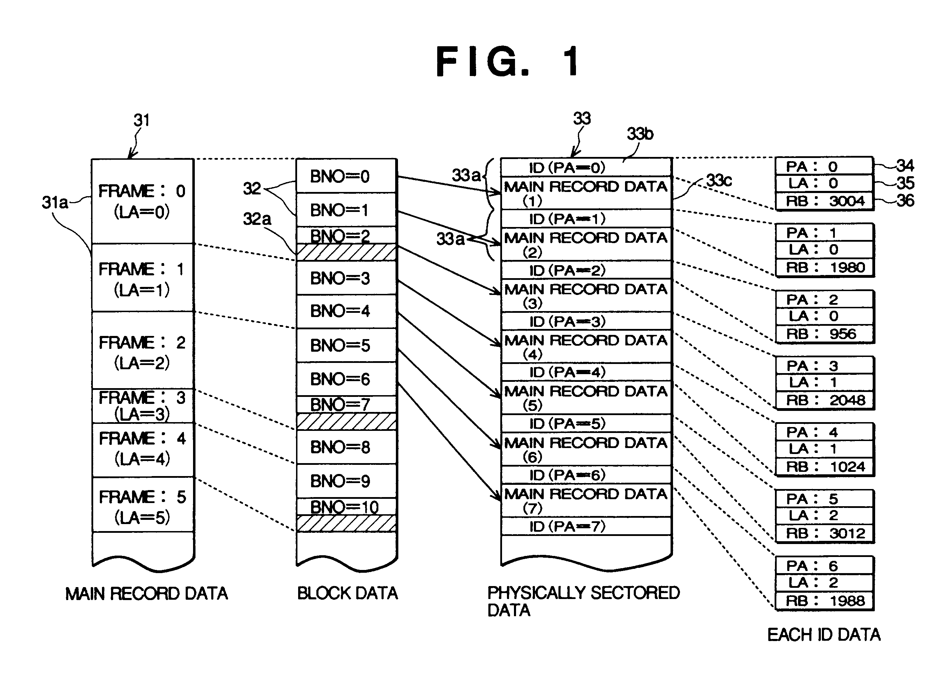

Fig. 1 is a schematic diagram showing the composition and composing steps of record data of a recording medium according to a first embodiment of the present invention.

In the drawing, main record data 31 is a data group of successive moving picture information that is compressed on frame-by-frame basis. "n" of "frame: n" represents a video frame number. A compressed data region of each video frame is defined as a logical sector region 31a that is designated a logical sector number (LA = n). The data amount of each logical sector region 31a varies. For example, the data amount of a zero-th logical sector is 3,004 bytes. The data amount of a first logical sector is 2,048 bytes. The data amount of a second logical sector is 3,012 bytes. The data amount of a third logical sector is 1,024 bytes. The data amount of a fourth logical sector is 1,524 bytes.

The main record data 31, which has different data amount for each logical sector, is divided into block data 32 with a predetermined data length (for example, 1,024 bytes). Each block data 32 is temporarily designated a block number n (BNO = n). The zero-th logical sector is divided into three portions that are stored in block numbers 0, 1, and 2. The data amount of the zero-th logical sector stored in the block number 2 is 956 bytes. Thus, since it does not satisfy 1,024 bytes of the data amount of one block, invalid data 32a is added so that the data stored in the block number 2 satisfies 1,024 bytes. In the drawing, the invalid data 32a is hatched. The first logical sector is divided into two portions that are stored in block numbers 3 and 4. Since the data amount of the first logical sector is 2,048 bytes, which is twice as large as the data amount of one block (= 1,024 bytes), it is not necessary to add invalid data. In the same manner, data of the logical sector 31a is divided and re-composed into the block data 32.

The block data 32 is converted into physically sectored data with data composition that is directly recorded on the recording medium. The physically sectored data 33 is composed of a plurality of successive physical sectors 33a. One physical sector 33a is composed of ID data 33b and main record data 33c. The ID data 33b has a predetermined bit length. The main record data 33c has the same bit length as that of one block of the block data 32. The ID data 33b is designated a physical sector number. In the drawing, the physical sector number is denoted by "PA = n". In this example, the block data 32 with the block number 0 is stored in the physical sector 33a with the physical sector number 0. The block data 32 with the block number 1 is stored in the physical sector 33a with the physical sector number 1. In the same manner, each block data 32 is successively stored in the corresponding physical sector 33a.

In the ID data 33b of each physical sector 33a, three types of information 34, 35, and 36 that are "PA: (n)", "LA: (m)", and "RB: (b)" are recorded. "n" of "PA: (n)" represents a physical sector number. "m" of "LA: (m)" represses the logical sector number of the logical sector 31a that contains the main record data 33c of the physical sector 33a. "b" of "RB: (b)" represents the remaining data amount of valid data amount (in bytes) of the logical sector 31a that contains the main record data 33c of the physical sector 33a.

For example, for the ID data 33b of the physical sector number 0 (PA = 0), "n", "m", and "b" are designated "0", "0", and "3004", respectively. "3004" represents valid data amount of the frame number 0. For the ID data 33b of the physical sector number 1, "n", "m", and "b" are designated "1", "0", and "1,980", respectively. "1,980" represents the difference between the valid data amount of the frame number 0 and the main record data amount 1,024 of the physical sector number 0. For the ID data 33b of the physical sector number 2, "n", "m", and "b" are designated "2", "0", and "956", respectively. "956" represents the difference between the valid data amount of the frame number 0 and the main record data amount 2,084 of the physical sector numbers 0 and 1. For the ID data 33b of the physical sector number 3, "n", "m", and "b" are "3", "1", and "2,048", respectively. "2,048" represents the valid data amount of the frame number 1. In the same manner, the ID data 33b that contains the above-described three types of information 34, 35, and 36 are recorded.

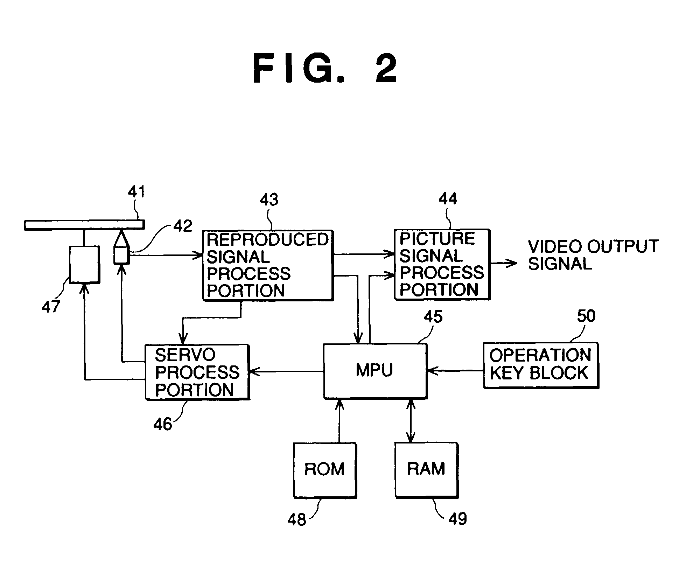

Next, a method for reproducing data from an optical disc with the above-described record data composition will be described. Fig. 2 is a block diagram showing the construction of an optical disc reproducing apparatus according to the embodiment.

In Fig. 2, reference numeral 41 is an optical disc. A record signal on the optical disc 41 is read by an optical pickup 42 and output to a reproduced signal process portion 43. The reproduced signal process portion 43 performs a predetermined process for the input signal and supplies the main record data to a picture signal process portion 44, information such as the ID data and management data that are used to perform reproduction control to an MPU (Micro-Processor Unit) 45, and information necessary for disc servo operation to a servo process portion 46. The picture signal process portion 44 performs a predetermined process for reproduced main record data corresponding to the data length information of the corresponding logical sector received from the MPU 45 and generates and outputs a video signal. The servo process portion 46 generates and outputs a spindle motor drive signal, a tracking control signal, and a focus control signal for the optical pickup 42 corresponding to a disc reproduction control signal received from the MPU 45 and control information received from the reproduced signal process portion 43. A spindle motor 47 rotates the optical disc 41 corresponding to a drive signal received from the servo process portion 46. The MPU 45 operates corresponding to an operation program stored in an ROM (Read Only Memory) 48 and stores working data to an RAM (Random Access Memory) 49. An operation key block 50 is connected to the MPU 45 so that the user inputs commands to the MPU 45.

Next, an example of the operation of the optical disc reproducing apparatus will be described. After the optical disc 41 is mounted on the apparatus, when the user inputs a command that causes the apparatus to reproduce data starting from the frame number 1 (namely, the logical sector number 1 (LA = 1)) through the operation key block 50, the MPU 45 commands the servo process portion 46 to read the physical sector with the physical sector number 0 (LA = 0). The reproduced signal process portion 43 performs a predetermined process for the physical sector that is read from the optical disc 41 and immediately sends the ID data to the MPU 45.

Thus, the MPU 45 acknowledges that the logical sector number is "0" and the remaining data amount of the valid data amount of the logical sector number 0 is 3,004 bytes. In addition, the MPU 45 acknowledges that the logical sector number 0 is composed of three sectors including the physical sector corresponding to the remaining data amount of the valid data amount. Thereafter, the MPU 45 commands the servo process portion 46 to read the physical sector number 3 that stores the leading data of the next logical sector.

The reproduced signal process portion 43 performs a predetermined process for the reproduced signal of the physical sector read from the optical disc 41 corresponding to the command and then sends the ID data to the MPU 45. The MPU 45 acknowledges that the logical sector number is 1 and the remaining data amount of the valid data amount of the logical sector number 1 is 2,048 bytes corresponding to the received ID data. Since the logical sector number 1 is the desired logical sector, which was designated through the operation key block 50, the MPU 45 continues to reproduce the logical sector, informs the picture signal process portion 44 that the valid data length is 2,048 bytes, and commands it to reproduce the main record data of the logical sector. The picture signal process portion 44 re-composes a picture for one frame corresponding to the input data with the valid data length of one frame and outputs the picture as a video signal.

Thereafter, the physical sector number 4 is reproduced and the ID data of the physical sector number 4 is sent to the MPU 45. Thus, the MPU 45 acknowledges that the logical sector number is "1" corresponding to the ID data and commands the picture signal process portion 44 to continue to reproduce the main record data of the logical sector number 1.

Thereafter, the physical sector number 5 is reproduced and the ID data of the physical sector number 5 is sent to the MPU 45. Thus, the MPU 45 acknowledges that the logical sector number is "2" corresponding to the ID data and that the new logical sector is preceded by the logical sector number 1. In this case, the MPU 45 acknowledges the valid data length of the logical sector corresponding to the ID data of the physical sector number 5, informs the picture signal process portion 44 that the valid data length is 3,012 bytes, and commands it to reproduce the main record data of the logical sector. Thus, the picture signal process portion 44 performs the picture reproducing process for the main record data of the logical sector number 2. The same process is successively performed.

While the reproducing process is being performed, if the user inputs a command that causes the apparatus to reproduce data starting from a desired frame number through the operation key block 50, the above-descried operation is performed.

Thus, according to the present invention, since the ID data region of each physical sector records the physical sector number 34, the logical sector number 35 (which contains the main record data of the physical data), and the remaining data amount 36 (of the valid data amount of the logical sector that contains the main record data of the physical sector), the reproducing apparatus can acknowledge the correlation between the logical sectors with variable data amount and physical sectors with fixed data amount. Thus, the apparatus does not need to have a record area for storing the correlation between the physical sectors and the logical sectors, thereby reducing the storage capacity of the memory.

Next, another (second) embodiment of the present invention will be described.

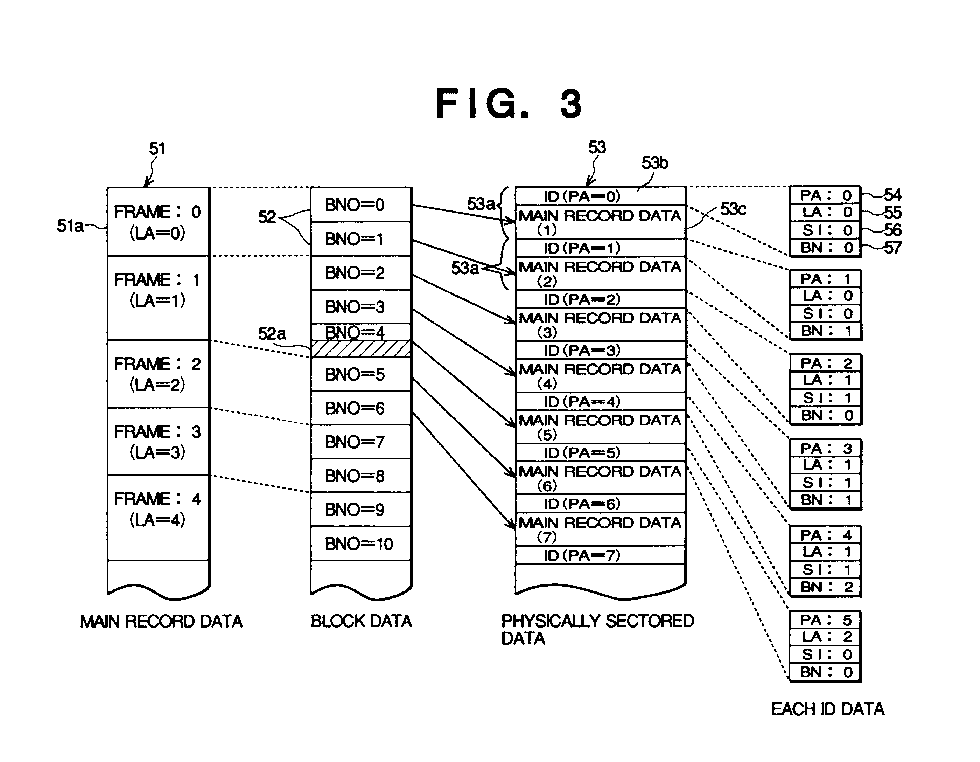

Fig. 3 is a schematic diagram showing the composition and composing steps of record data of a recording medium according to the second embodiment of the present invention.

In the drawing, main record data 51 is a data group of successive moving picture information compressed on frame-by-frame basis. "n" of "frame: n" represents a video frame number. The compressed data region of each video frame is defined as a logical sector region 51a that is designated a logical sector number (LA = n). The data amount of each logical sector region 51a is either 2,048 bytes or 2,400 bytes. In other words, each logical sector 51a has one of a plurality of types of data amount (in this example, two types). For example, the data amount of a zero-th logical sector is 2,048 bytes. The data amount of a first logical sector is 2,400 bytes. The data amount of a second logical sector is 2,048 types. The data amount of a third logical sector is 2,048 bytes. The data amount of a fourth logical sector is 2,400 bytes. The main record data 51 with the predetermined data amount as a logical sector is divided into block data 52 with a predetermined data length (for example, 1,024 bytes). Each block data 52 is temporarily designated a block number n (BNO = n). The zero-th logical sector is divided into two portions that are stored in block numbers 0 and 1. The first logical sector is divided into three portions that are stored in block numbers 2, 3, and 4. The data amount of the first logical sector stored in the block number 4 is 352 bytes. Thus, since it does not satisfy the data amount of 1,024 bytes of one block, invalid data 52a is added so that the first logical sector satisfies 1,024 bytes. In the drawing, the invalid data 52a is hatched. In the same manner, data of the logical sector 51a is successively divided and re-composed into the block data 52. The block data 52 is converted into physically sectored data that is directly recorded on the recording medium. The physically sectored data 53 is composed of a plurality of successive physical sectors 53a. One physical sector 53a is composed of ID data 53b and main record data 53c. The ID data 53b has a predetermined bit length. The main record data 53c has the bit length same as that of the block data 53. The ID data 53b is designated a physical sector number. The physical sector number is denoted by "PA = n". In this example, the block data 52 with the block number 0 is stored in the physical sector 53a with the physical sector number 0. The block data 52 with the block number 1 is stored in the physical sector 53a with the physical sector number 1. In the same manner, the block data 52 is successively stored in the corresponding physical sector 53a.

In the ID data 53b of each physical sector 53a, four types of information 54, 55, 56, and 57 that are "PA: (n)", "LA: (m)", "SI: (i)", and "BN: (b)" are recorded. "n" of "PA: (n)" represents a physical sector number. "m" of "LA: (m)" represents the logical sector number of a logical sector 51a that contains the main record data 53c of the physical sector 53a. "i" of "SI: (i)" represents data amount type of the logical sector 51a that contains the main record data 53c of the physical sector 53a. In other words, this information is an identification flag that identifies whether the data amount of the logical sector 51a is 2,048 bytes or 2,400 bytes. When the identification flag "i" is "0", it represents that the data amount of the logical sector is 2,048 bytes. When the identification flag "i" is "1", it represents that the data amount of the logical sector is 2,400 bytes. "b" of "BN: (b)" represents the block number of the block data 52 that composes the main record data 33c of the physical sector 53a. For example, for the ID data 53b of the physical sector number 0, "n", "m", "i", and "b" are designated "0", "0", "0", and "0", respectively. For the ID data 53b of the physical sector number 1, "n", "m", "i", and "b" are designated "1", "0", "0", and "1", respectively. For the ID data 53b of the physical sector number 2, "n", "m", "i", and "b" are designated "2", "1", "1", and "0", respectively. For the ID data 53b of the physical sector number 3, "n", "m", "i", and "b" are designated "3", "1", "1", and "1", respectively. In the same manner, the ID data 53b, which contains of the above-described four types of information 54, 55, 56, and 57, are recorded.

Next, a method for reproducing data from the optical disc with the above-described record data composition will be described. Since the construction of the optical disc reproducing apparatus is the same as that shown in Fig. 2, the description thereof will be omitted. Next, with reference to the reference numbers shown in Fig. 2, the operation of the optical disc reproducing apparatus will be described.

After the optical disc 41 is mounted on the apparatus, when the user inputs a command that causes the apparatus to reproduce data starting from the frame number 0 (namely, the logical sector number 0) through the operation key block 50, the MPU 45 commands the servo process portion 46 to read the physical sector with the physical sector number 0 (LA = 0). The reproduced signal process portion 43 performs a predetermined process for the reproduced signal of the physical sector that is read from the optical disc 41 and sends the ID data to the MPU 45.

Thus, the MPU 45 acknowledges that the physical sector number, the logical sector number, and the data amount of the logical sector number 0 are "0", "0", and "2,048", respectively, corresponding to the received ID data. In addition, the MPU 45 acknowledges that the main record data of the physical sector is the first block of the logical sector number 0. Thus, the MPU 45 informs the picture signal process portion 44 that the valid data length is 2,048 and commands it to performs the picture reproducing process for the main record data of the logical sector. Thus, the picture signal process portion 44 re-composes the picture of one frame corresponding to the input data with the valid data length for one frame and outputs it as a video signal.

Thereafter, the picture signal process portion 44 continues to reproduce the physical sector number 1 and sends the ID data of the physical sector number 1 to the MPU 45. The MPU 45 acknowledges that the physical sector number, the logical sector number, and the data amount thereof are "1", "0", and "2,048", respectively. In addition, the MPU 45 acknowledges that the main record data of the physical sector is the second block of the logical sector number 0. Thus, the MPU 45 commands the picture signal process portion 44 to continuously reproduce the main record data of the physical sector number 1.

Thereafter, the picture signal process portion 44 reproduces the physical sector number 2 and sends the ID data of the physical sector number 2 to the MPU 45. Thus, the MPU 45 acknowledges that the physical sector number, the logical sector number, and the data amount thereof are "2", "1", and "2,400", respectively, corresponding to the received ID data. In addition, the MPU 45 acknowledges that the main record data of the physical sector is the first block of the logical sector number 1. In this case, the MPU 45 informs the picture signal process portion 44 that the valid data length is 2,400 and commands it to reproduce the main record data of the physical sector. In the same manner, the process is continued.

Thus, according to the second embodiment of the present invention, since the physical sector number 54, the logical sector number 55 (which contains the main record data of the physical sector), the data amount type 56 (which contains the main record data of the physical sector), and the block number 57 (of the block data that contains the main record data of the physical sector) are recorded in the ID data region of each physical sector, the reproducing apparatus can acknowledge the correlation between the logical sectors with variable data amount (one of a plurality of types of data amount) and physical sectors with fixed data amount. Thus, it is not necessary to provide a storage area for storing a management table that correlates the physical sectors and logical sectors in the apparatus, thereby reducing the storage capacity of the memory.

In the above-described embodiments, the management table was omitted. However, the management table can be used along with the ID data described in the embodiments.

As described above, according to the present invention, even if main record data with variable data amount as each logical sector is stored in a physical sector with fixed data amount, since logical sectors and physical sectors can be correlated without need to store address management data in a memory region of the reproducing apparatus, the size of the apparatus can be reduced.

## Claims

1. A method of recording data grouped in logical sectors with a variable bit length on a recording medium organized in physical sectors with a fixed bit length comprising dividing each of the plurality of logical sectors in units of said fixed bit length and recording said data units in said physical sectors; and recording correlation information representing the correlation between the physical sectors and the logical sectors in each of said physical sectors.

2. The data recording method as set forth in claim 1,
wherein each physical sector corresponding to a plurality of data that composes one logical sector is disposed on the recording medium in the order of reproduction.

3. The data recording method as set forth in claim 1,
wherein the correlation information contains first information and second information, the first information identifying a physical sector that contains the correlation information, the second information identifying a logical sector that contains the correlation information.

4. The data recording method as set forth in claim 3,
wherein the correlation information contains third information representing the remaining data amount of a valid bit length of a logical sector that contains a physical sector that contains the correlation information.

5. The data recording method as set forth in claim 1,
wherein the bit length of each logical sector is selected from a plurality of predetermined types which are defined beforehand.

6. The data recording method as set forth in claim 5,
wherein each physical sector corresponding to a plurality of data that composes one logical sector is disposed on the recording medium in the order of reproduction.

7. The data recording method as set forth in claim 5,
wherein the correlation information contains first information and second information, the first information identifying a physical sector that contains the correlation information, the second information identifying a logical sector that contains the correlation information.

8. The data recording method as set forth in claim 7,
wherein the correlation information contains third information and fourth information, the third information representing the remaining data amount of a valid bit length of a logical sector that contains a physical sector that contains the correlation information, the fourth information representing the position of the physical sector that contains the correlation information in a physical sector group that composes the logical sectors.

9. A recording medium containing data organized as a plurality of logical sectors with a variable bit length, the data of each logical sector being divided in physical sectors with a fixed bit length, wherein each physical sector contains correlation information that represents the correlation between the physical sector and the logical sector.

10. The recording medium as set forth in claim 9,
wherein each physical sector corresponding to a plurality of data that compose one logical sector is disposed on the recording medium in the order of reproduction.

11. The recording medium as set forth in claim 9,
wherein the correlation information contains first information and second information, the first information identifying a physical sector that contains the correlation information, the second information identifying a logical sector that contains the correlation information.

12. The recording medium as set forth in claim 11,
wherein the correlation information contains third information representing the remaining data amount of a valid bit length of a logical sector that contains a physical sector that contains the correlation information.

13. The recording medium as set forth in claim 9,
wherein the bit length of each logical sector is selected from a plurality of predetermined types which are defined beforehand.

14. The recording medium as set forth in claim 13,
wherein each physical sector corresponding to a plurality of data that composes one logical sector is disposed on the recording medium in the order of reproduction.

15. The recording medium as set forth in claim 13,
wherein the correlation information contains first information and second information, the first information identifying a physical sector that contains the correlation information, the second information identifying a logical sector that contains the correlation information.

16. The recording medium as set forth in claim 15,
wherein the correlation information contains third information and fourth information, the third information representing the remaining data amount of a valid bit length of a logical sector that contains a physical sector that contains the correlation information, the fourth information representing the position of the physical sector that contains the correlation information in a physical sector group that composes the logical sectors.

17. A reproducing apparatus for reproducing data from a recording medium as defined in claim 9, the apparatus comprising:
input means for designating data to be reproduced on logical sector by logical sector basis; and
control means for determining the correlation between a logical sector designated by said input means and a physical sector corresponding to the correlation information reproduced from the physical sector and performing a predetermined control corresponding to the determined result.

18. The reproducing apparatus as set forth in claim 17,
wherein said correlation information contains first information and second information, the first information identifying a physical sector that contains the correlation information, the second information identifying a logical sector that contains the correlation information, and
wherein said control means is adapted for determining whether or not the physical sector is contained in the logical sector designated by said input means corresponding to identification information of the logical sector reproduced from the physical sector and reproducing data of the physical sector when the physical sector is contained in the designated logical sector.

19. The reproducing apparatus as set forth in claim 18,
wherein the correlation information contains third information that represents the remaining data amount of a valid bit length of a logical sector that contains a physical sector that contains the correlation information, and
wherein said control means is adapted for determining whether or not the physical sector is contained in the logical sector designated by said input means corresponding to identification information of the logical sector reproduced from the physical sector, reproducing data of the physical sector when the physical sector is contained in the designated logical sector, and locating a leading physical sector that contains the next logical sector corresponding to the remaining data amount of the valid bit length of the logical sector reproduced from the physical sector and reproducing identification information of the logical sector from the physical sector when the physical sector is not contained in the logical sector.

## Patentansprüche

1. Verfahren zum Aufzeichnen von Daten, die in logischen Sektoren mit einer variabler Bitlänge auf einem Aufzeichnungsmedium gruppiert sind, das in physikalische Sektoren mit einer festen Bitlänge organisiert ist, enthaltend Aufteilen jedes der Mehrzahl von logischen Sektoren in Einheiten von fester Bitlänge, und Aufzeichnen der Dateneinheiten in den physikalischen Sektoren, und Aufzeichnen der Korrelationsinformationen, die die Korrelation zwischen den physikalischen Sektoren und den logischen Sektoren darstellen, in jedem der physikalischen Sektoren.

2. Datenaufzeichnungsverfahren gemäß Anspruch 1, bei dem jeder physikalische Sektor, der einer Mehrzahl an Daten entspricht, die einen logischen Sektor bilden, auf dem Aufzeichnungsmedium in der Reihenfolge der Wiedergabe angeordnet ist.

3. Datenaufzeichnungsverfahren gemäß Anspruch 1, bei dem die Korrelationsinformationen eine erste Information und eine zweite Information enthalten, wobei die erste Information einen physikalischen Sektor identifiziert, der die Korrelationsinformation enthält, und die zweite Information einen logischen Sektor identifiziert, der die Korrelationsinformationen enthält.

4. Datenaufzeichnungsverfahren gemäß Anspruch 3, wobei die Korrelationsinformationen dritte Informationen enthalten, die den verbleibenden Datenbetrag einer gültigen Bitlänge eines logischen Sektors darstellen, der einen physikalischen Sektor enthält, der die Korrelationsinformationen enthält.

5. Datenaufzeichnungsverfahren gemäß Anspruch 1, bei dem die Bitlänge jedes logischen Sektors aus einer Mehrzahl von vorbestimmten Typen, die vorher definiert sind, ausgewählt werden.

6. Datenaufzeichnungsverfahren gemäß Anspruch 5, wobei jeder physikalische Sektor einer Mehrzahl von Daten entspricht, die einen logischen Sektor bilden, auf dem Aufzeichnungsmedium in der Reihenfolge der Wiedergabe angeordnet ist.

7. Datenaufzeichnungsverfahren gemäß Anspruch 5, bei dem die Korrelationsinformationen erste Informationen und zweite Informationen enthalten, wobei die ersten Informationen einen physikalischen Sektor identifizieren, der die Korrelationsinformationen enthält, die zweiten Informationen einen logischen Sektor identifizieren, der die Korrelationsinformationen enthält.

8. Datenaufzeichnungsverfahren gemäß Anspruch 7, bei dem die Korrelationsinformationen dritte Informationen und vierte Informationen enthalten, wobei die dritten Informationen den verbleibenden Datenbetrag einer gültigen Bitlänge eines logischen Sektors darstellen, der einen physikalischen Sektor enthält, der die Korrelationsinformationen enthält, und die vierten Informationen die Position des physikalischen Sektors darstellen, die die Korrelationsinformationen in einer physikalischen Sektorgruppe, die die logischen Sektoren bildet, enthält.

9. Aufzeichnungsträger, enthaltend Daten, die organisiert sind als Mehrzahl von logischen Sektoren mit einer variablen Bitlänge, wobei die Daten jedes logischen Sektors in physikalische Sektoren mit einer festen Bitlänge aufgeteilt sind, wobei jeder physikalische Sektor Korrelationsinformationen enthält, die die Korrelation zwischen dem physikalischen Sektor und dem logischen Sektor darstellen.

10. Aufzeichnungsträger gemäß Anspruch 9, bei dem jeder physikalische Sektor, der einer Mehrzahl von Daten entspricht, die einen logischen Sektor bilden, auf dem Aufzeichnungsträger in der Reihenfolge der Wiedergabe angeordnet ist.

11. Aufzeichnungsträger gemäß Anspruch 9, bei dem die Korrelationsinformationen erste Informationen und zweite Informationen enthalten, wobei die ersten Informationen einen physikalischen Sektor identifizieren, der die Korrelationsinformationen enthält, und die zweiten Informationen einen logischen Sektor identifizieren, der die Korrelationsinformationen enthält.

12. Aufzeichnungsträger gemäß Anspruch 11, bei dem die Korrelationsinformationen dritte Informationen enthalten, die den verbleibenden Datenbetrag einer gültigen Bitlänge eines logischen Sektors darstellen, der einen physikalischen Sektor enthält, der die Korrelationsinformationen enthält.

13. Aufzeichnungsträger gemäß Anspruch 9, bei dem die Bitlänge eines jeden logischen Sektors aus einer Mehrzahl vorbestimmter Typen, die vorher definiert sind, ausgewählt ist.

14. Aufzeichnungsträger gemäß Anspruch 13, bei dem jeder physikalische Sektor, der einer Mehrzahl von Daten entspricht, die einen logischen Sektor bilden, auf dem Aufzeichnungsträger in der Reihenfolge der Wiedergabe angeordnet ist.

15. Aufzeichnungsträger gemäß Anspruch 13, bei dem die Korrelationsinformationen erste Informationen und zweite Informationen enthalten, wobei die ersten Informationen einen physikalischen Sektor identifizieren, der die Korrelationsinformationen enthält, und die zweiten Informationen einen logischen Sektor identifizieren, der die Korrelationsinformationen enthält.

16. Aufzeichnungsträger gemäß Anspruch 15, bei dem die Korrelationsinformationen dritte Informationen und vierte Informationen enthalten, wobei die dritten Informationen den verbleibenden Datenbetrag einer gültigen Bitlänge eines logischen Sektors darstellen, der einen physikalischen Sektor enthält, der die Korrelationsinformationen enthält, und die vierten Informationen die Position des physikalischen Sektors darstellen, der die Korrelationsinformationen in einer Gruppe von physikalischen Sektoren enthält, die die logischen Sektoren bildet.

17. Wiedergabevorrichtung zum Wiedergeben von Daten von einem Aufzeichnungsträger, wie er in Anspruch 9 definiert ist, wobei die Vorrichtung aufweist:
eine Eingabeeinrichtung zum Bezeichnen von Daten, die auf einer Basis von logischem Sektor zu logischem Sektor wiedergegeben werden sollen; und eine Steuereinrichtung zum Bestimmen der Korrelation zwischen einem logischen Sektor, der von der Eingabeeinrichtung bezeichnet ist, und einem physikalischen Sektor, der den Korrelationsinformationen entspricht, die aus dem physikalischen Sektor wiedergegeben werden, und zum Durchführen einer vorbestimmten Steuerung, die dem bestimmten Ergebnis entspricht.

18. Wiedergabevorrichtung gemäß Anspruch 17, bei der die Korrelationsinformationen erste Informationen und zweite Informationen enthalten, wobei die ersten Informationen einen physikalischen Sektor identifizieren, der die Korrelationsinformationen enthält, und die zweiten Informationen einen logischen Sektor identifizieren, der die Korrelationsinformationen enthält, und
bei der die Steuereinrichtung dazu eingerichtet ist, zu bestimmen, ob der physikalische Sektor in dem logischen Sektor, der durch die Eingabeeinrichtung bezeichnet ist, enthalten ist oder nicht, entsprechend der Identifikationsinformationen des logischen Sektors, die von dem physikalischen Sektor wiedergegeben wurden, und die Daten des physikalischen Sektors wiedergeben, wenn der physikalische Sektor in dem bezeichneten logischen Sektor enthalten ist.

19. Wiedergabevorrichtung gemäß Anspruch 18, bei der die Korrelationsinformationen dritte Informationen enthalten, die den verbleibenden Datenbetrag einer gültigen Bitlänge eines logischen Sektors darstellen, der einen physikalischen Sektor enthält, der die Korrelationsinformationen enthält, und
wobei die Steuereinrichtung dazu eingerichtet ist, zu bestimmen, ob der physikalische Sektor in dem logischen Sektor, der von der Eingabeeinrichtung entsprechend den Identifikationsinformationen des von dem physikalischen Sektor wiedergegebenen logischen Sektors bezeichnet wurde, enthalten ist oder nicht, zum Wiedergeben von Daten des physikalischen Sektors, wenn der physikalische Sektor in dem bezeichneten logischen Sektor enthalten ist, und zum Auffinden eines führenden physikalischen Sektors, der den nächsten logischen Sektor entsprechend dem verbleibenden Datenbetrag der gültigen Bitlänge des logischen Sektors entspricht, der von dem physikalischen Sektor wiedergegeben wurde, und zum Wiedergeben der Identifikationsinformationen des logischen Sektors von dem physikalischen Sektor, wenn der physikalische Sektor nicht in dem logischen Sektor enthalten ist.

## Revendications

1. Procédé d'enregistrement de données groupées dans des secteurs logiques selon une longueur binaire variable sur un support d'enregistrement organisé selon des secteurs physiques selon une longueur binaire fixe, comprenant la division de chacun de la pluralité de secteurs logiques selon des unités de ladite longueur binaire fixe et l'enregistrement desdites unités de données dans lesdits secteurs physiques; et l'enregistrement d'une information de corrélation représentant la corrélation entre les secteurs physiques et les secteurs logiques dans chacun desdits secteurs physiques.

2. Procédé d'enregistrement de données selon la revendication 1, dans lequel chaque secteur physique correspondant à une pluralité de données qui composent un secteur logique est disposé sur le support d'enregistrement selon l'ordre de reproduction.

3. Procédé d'enregistrement de données selon la revendication 1, dans lequel l'information de corrélation contient une première information et une seconde information, la première information identifiant un secteur physique qui contient l'information de corrélation, la seconde information identifiant un secteur logique qui contient l'information de corrélation.

4. Procédé d'enregistrement de données selon la revendication 3, dans lequel l'information de corrélation contient une troisième information qui représente la quantité de données restantes d'une longueur binaire valide d'un secteur logique qui contient un secteur physique qui contient l'information de corrélation.

5. Procédé d'enregistrement de données selon la revendication 1, dans lequel la longueur binaire de chaque secteur logique est choisie parmi une pluralité de types prédéterminés qui sont définis au préalable.

6. Procédé d'enregistrement de données selon la revendication 5, dans lequel chaque secteur physique correspondant à une pluralité de données qui composent un secteur logique est disposé sur le support d'enregistrement selon l'ordre de reproduction.

7. Procédé d'enregistrement de données selon la revendication 5, dans lequel l'information de corrélation contient une première information et une seconde information, la première information identifiant un secteur physique qui contient l'information de corrélation, la seconde information identifiant un secteur logique qui contient l'information de corrélation.

8. Procédé d'enregistrement de données selon la revendication 7, dans lequel l'information de corrélation contient une troisième information et une quatrième information, la troisième information représentant la quantité de données restantes d'une longueur binaire valide d'un secteur logique qui contient un secteur physique qui contient l'information de corrélation, la quatrième information représentant la position du secteur physique qui contient l'information de corrélation dans un groupe de secteurs physiques qui compose les secteurs logiques.

9. Support d'enregistrement contenant des données organisées en tant que pluralité de secteurs logiques selon une longueur binaire variable, les données de chaque secteur logique étant divisées selon des secteurs physiques selon une longueur binaire fixe, où chaque secteur physique contient une information de corrélation qui représente la corrélation entre le secteur physique et le secteur logique.

10. Support d'enregistrement selon la revendication 9, dans lequel chaque secteur physique correspondant à une pluralité de données qui composent un secteur logique est disposé sur le support d'enregistrement selon l'ordre de reproduction.

11. Support d'enregistrement selon la revendication 9, dans lequel l'information de corrélation contient une première information et une seconde information, la première information identifiant un secteur physique qui contient l'information de corrélation, la seconde information identifiant un secteur logique qui contient l'information de corrélation.

12. Support d'enregistrement selon la revendication 11, dans lequel l'information de corrélation contient une troisième information représentant la quantité de données restantes d'une longueur binaire valide d'un secteur logique qui contient un secteur physique qui contient l'information de corrélation.

13. Support d'enregistrement selon la revendication 9, dans lequel la longueur binaire de chaque secteur logique est choisie parmi une pluralité de types prédéterminés qui sont définis au préalable.

14. Support d'enregistrement selon la revendication 13, dans lequel chaque secteur physique correspondant à une pluralité de données qui composent un secteur logique est disposé sur le support d'enregistrement selon l'ordre de reproduction.

15. Support d'enregistrement selon la revendication 13, dans lequel l'information de corrélation contient une première information et une seconde information, la première information identifiant un secteur physique qui contient l'information de corrélation, la seconde information identifiant un secteur logique qui contient l'information de corrélation.

16. Support d'enregistrement selon la revendication 15, dans lequel l'information de corrélation contient une troisième information et une quatrième information, la troisième information représentant la quantité de données restantes d'une longueur binaire valide d'un secteur logique qui contient un secteur physique qui contient l'information de corrélation, la quatrième information représentant la position du secteur physique qui contient l'information de corrélation dans un groupe de secteurs physiques qui compose les secteurs logiques.

17. Appareil de reproduction pour reproduire des données à partir d'un support d'enregistrement selon la revendication 9, l'appareil comprenant:
des moyens d'entrée pour désigner des données destinées à être reproduites sur une base secteur logique par secteur logique; et
des moyens de commande pour déterminer la corrélation entre un secteur logique désigné par lesdits moyens d'entrée et un secteur physique correspondant à l'information de corrélation reproduite à partir du secteur physique et pour réaliser une commande prédéterminée correspondant au résultat déterminé.

18. Appareil de reproduction selon la revendication 17, dans lequel:
ladite information de corrélation contient une première information et une seconde information, la première information identifiant un secteur physique qui contient l'information de corrélation, la seconde information identifiant un secteur logique qui contient l'information de corrélation; et
lesdits moyens de commande sont adaptés pour déterminer si oui ou non le secteur physique est contenu dans le secteur logique désigné par lesdits moyens d'entrée correspondant à une information d'identification du secteur logique reproduit à partir du secteur physique et pour reproduire des données du secteur physique lorsque le secteur physique est contenu dans le secteur logique désigné.

19. Appareil de reproduction selon la revendication 18, dans lequel:
l'information de corrélation contient une troisième information qui représente la quantité de données restantes d'une longueur binaire valide d'un secteur logique qui contient un secteur physique qui contient l'information de corrélation; et dans lequel
lesdits moyens de commande sont adaptés pour déterminer si oui ou non le secteur physique est contenu dans le secteur logique désigné par lesdits moyens d'entrée correspondant à une information d'identification du secteur logique reproduit à partir du secteur physique, pour reproduire des données du secteur physique lorsque le secteur physique est contenu dans le secteur logique désigné, pour localiser un secteur physique de tête qui contient le secteur logique suivant correspondant à la quantité de données restantes de la longueur binaire valide du secteur logique reproduit à partir du secteur physique et pour reproduire une information d'identification du secteur logique à partir du secteur physique lorsque le secteur physique n'est pas contenu dans le secteur logique.
